# EUROPEAN PATENT APPLICATION

(11) **EP 3 865 643 A1**
(43) Date of publication of application: **18.08.2021**
(21) Application number: 19870293.8
(22) Date of filing: 09.10.2019
(51) Int. Cl.: E05B 47/02, E05B 15/00, G07C 9/00, H04M 1/725

(54) **LOW-POWER-CONSUMPTION INTELLIGENT ELECTRIC LOCK MECHANISM**

(30) Priority: 09.10.2018 CN 201811170984
(71) Applicant: Wong, Pui Ling, Hong Kong 999077 (CN)
(72) Inventor: LEUNG, Lok Shun, Hong Kong 999077 (CN); WONG, Pui Ling, Hong Kong 999077 (CN)
(74) Representative: Hellmich, Wolfgang
(86) International application number: PCT/CN2019/110091
(87) International publication number: WO 2020/073914

(57) **Abstract**

The present invention discloses a low-power-consumption intelligent electric lock mechanism, which includes a lock case, a lock-cylinder housing, a motor, a strike plate, a first reset spring, a central rod, a spiral propulsion structure and a holding block. The lock case is fixed within a door frame, the lock case and a lock inner housing form a chamber for accommodating the lock-cylinder housing, two ends of the central rod are respectively fixed to two side walls of the lock-cylinder housing, one end of the first reset spring is fixed within the strike plate, another end of the first reset spring is held against an inner wall of the lock-cylinder housing, one end of the spiral propulsion structure is mechanically connected with the motor, another end of the spiral propulsion structure is connected with the holding block, a top portion of the holding block is held against a bottom portion of the strike plate. When the motor is started, the spiral propulsion structure pulls back the holding block, the first reset spring drives the strike plate to be inserted into the lock-cylinder housing; when the motor is switched off, the spiral propulsion structure pushes out the holding block, the holding block drives the strike plate to rise and protrude out of the lock-cylinder housing.

## Description

### BACKGROUND OF THE PRESENT INVENTION

### Field of Invention

The present invention relates to the field of intelligent lock technology, and more particularly to a low-power-consumption intelligent electric lock mechanism.

### Description of Related Arts

With the rapid development of the Internet, smart phones have become a necessity in life, and intelligent access control systems have also been developed. Many electronically controlled door locks and fingerprint locks are able to be used with smart phones. Based on the fact that human inertia is not replaced by complete intelligence, while developing new intelligent products, it should be firstly considered whether products are able to cooperate closely with existing locks to minimize costs.

### SUMMARY OF THE PRESENT INVENTION

Aiming at deficiencies in the prior arts mentioned above, the present invention provides a low-power-consumption intelligent electric lock mechanism which is simple in structure and convenient in operation.

To achieve the above object, the present invention provides a low-power-consumption intelligent electric lock mechanism, which comprises a lock case, a lock-cylinder housing, a motor, a strike plate, a first reset spring, a central rod, a spiral propulsion structure and a holding block, wherein:
the lock case is fixed within a door frame, two ends of the central rod are respectively fixed to two side walls of the lock-cylinder housing, both of a tail of the strike plate and the first reset spring penetrate through the central rod, one end of the first reset spring is fixed within the strike plate, another end of the first reset spring is held against an inner wall of the lock-cylinder housing, one end of the spiral propulsion structure is mechanically connected with the motor, another end of the spiral propulsion structure is connected with the holding block, a top portion of the holding block is held against a bottom portion of the strike plate,
thereby when the motor is started, the spiral propulsion structure pulls back the holding block, the first reset spring drives the strike plate to be inserted into the lock-cylinder housing; when the motor is switched off, the spiral propulsion structure pushes out the holding block, the holding block drives the strike plate to rise and protrude out of the lock-cylinder housing.

Preferably, the low-power-consumption intelligent electric lock mechanism further comprises a wireless power transmitting unit, a wireless power receiving unit and a wired battery unit, wherein the wireless power receiving unit and the wired battery unit are located at a side of the lock case, the wireless power transmitting unit is opposite to the wireless power receiving unit, and the wireless power transmitting unit is located within a door.

Preferably, the wireless power transmitting unit comprises a wireless transmitting coil, a transmitting control board, a battery and a wireless battery housing, wherein an input end of the transmitting control board is connected with the battery, an output end of the transmitting control board is connected with the wireless transmitting coil, the wireless battery housing is sleeved outside the transmitting control board; the wireless power receiving unit comprises a wireless receiving coil and a receiving control board, wherein an input end of the receiving control board is connected with the wireless receiving coil, an output end of the receiving control board is connected with the motor through an FPCB (flexible printed circuit board), the wireless transmitting coil is opposite to the wireless receiving coil.

Preferably, the spiral propulsion structure comprises an active inner rod, a passive outer rod, a second reset spring and a threaded push plate, wherein one end of the active inner rod is mechanically connected with the motor, another end of the active inner rod is sleeved within the passive outer rod, the second reset spring is clamped between the active inner rod and the passive outer rod, the holding block is fixed to an end portion of the passive outer rod, the passive outer rod has external threads at an external surface thereof, a rack is provided at a position where the threaded push plate contacts with the external threads.

Preferably, the active inner rod comprises an inner rod gear portion and an inner rod body portion; the passive outer rod comprises a screw rod portion and a connection portion, wherein the inner rod body portion is a cross-shaped solid rod, an internal surface of the screw rod portion has a hollow slot which matches the cross-shaped solid rod.

Preferably, the low-power-consumption intelligent electric lock mechanism further comprises a driving wheel and a driven wheel, wherein the driving wheel is fixed to an end portion of the motor, one end of the driven wheel is engaged with the driving wheel, another end of the driven wheel is engaged with the inner rod gear portion, the inner rod gear portion is integrally formed with the inner rod body portion.

Preferably, the holding block has a notch, the connection portion comprises a round head portion and a round neck portion, wherein the round head portion passes through the notch, the round neck portion is stuck in the notch, and the round head portion, the round neck portion and the screw rod portion are integrally formed.

Preferably, the spiral propulsion structure further comprises a fixed plate, a third reset spring and a fixed cover, wherein the fixed plate covers a surface of the motor and the passive outer rod, the fixed plate has a slideway for fixing the threaded push plate, one end of the threaded push plate holds against an internal surface of the strike plate, another end of the threaded push plate is inserted into the slideway, the third reset spring is fixed within the slideway and clamped between the threaded push plate and the lock-cylinder housing, the fixed cover is fixed to the lock-cylinder housing, and the threaded push plate is provided between the fixed cover and the fixed plate.

Preferably, the threaded push plate comprises a holding portion, a rack portion and a slide portion, wherein the holding portion, the rack portion and the slide portion form a Z-shape, the rack portion is engaged with the external threads of the passive outer rod, the slide portion comprises a slide rail which matches the slideway and has a spring accommodating slot for fixing the third reset spring.

Preferably, the strike plate comprises a rotary portion and a limit portion, wherein the rotary portion is located at two ends of the limit portion, an end portion of the rotary portion passes through the central rod, the holding block is held against the rotary portion, an internal surface of the limit portion comprises a first inclined face and a second inclined face, the first inclined face is seized with the electric lock, the second inclined face contacts with the holding portion.

Beneficial effects of the present invention are as follows.

Compared with the prior art, in the intelligent electric lock mechanism provided by the present invention, the strike plate is fixed to a central shaft, the holding block is held against the strike plate under normal conditions, a head portion of the strike plate protrudes out of the lock-cylinder housing for achieving the clamping fixation with an electric lock, so that a door is closed. The motor is controlled by a mobile phone. When the motor is started, the spiral propulsion structure pulls back the holding block, the first reset spring drives the strike plate to be inserted into the lock-cylinder housing, so that the strike plate is disconnected with the electric lock, thereby opening the door; when the motor is switched off, the spiral propulsion structure pushes out the holding block, the holding block drives the strike plate to rise and protrude out of the lock-cylinder housing. The intelligent electric lock mechanism provided by the present invention is able to adapt to different sizes and different types of electronic locks, which is convenient for the modification of electronic locks. At the same time, power consumption is only needed when controlling the motor, so the power consumption of the intelligent electric lock mechanism is extremely low.

### BRIEF DESCRIPTION OF THE DRAWINGS

Fig. 1 is a structurally schematic view of a low-power-consumption intelligent electric lock mechanism in wired charging state provided by the present invention.
Fig. 2 is a structurally schematic view of the low-power-consumption intelligent electric lock mechanism in wireless charging state provided by the present invention.
Fig. 3 is a partially exploded view of a lock-cylinder housing of the low-power-consumption intelligent electric lock mechanism provided by the present invention.
Fig. 4 is an exploded view of a wireless power transmitting unit of the low-power-consumption intelligent electric lock mechanism provided by the present invention.
Fig. 5 is a first partial structural diagram of a spiral propulsion structure of the low-power-consumption intelligent electric lock mechanism provided by the present invention.
Fig. 6 is a second partial structural diagram of the spiral propulsion structure of the low-power-consumption intelligent electric lock mechanism provided by the present invention.
Fig. 7 is a third partial structural diagram of the spiral propulsion structure of the low-power-consumption intelligent electric lock mechanism provided by the present invention.
Fig. 8 shows a connection relationship between an active inner rod and a passive outer rod of the low-power-consumption intelligent electric lock mechanism provided by the present invention.
Fig. 9 is a partially schematic view of a strike plate of the low-power-consumption intelligent electric lock mechanism provided by the present invention.
Fig. 10 is a schematic view of a threaded push plate of the low-power-consumption intelligent electric lock mechanism provided by the present invention.

Main reference numbers are explained as follows.

| | |
|---|---|
| 10: lock case; | 11: wired battery unit; |
| 12: lock-cylinder housing; | 13: motor; |
| 14: strike plate; | 15: first reset spring; |
| 16: central rod; | 17: spiral propulsion structure; |
| 18: holding block; | 19: wireless power transmitting unit; |
| 20: wireless power receiving unit; | 21: FPCB (flexible printed circuit board); |
| 22: driving wheel; | 23: driven wheel; |
| 141: rotary portion; | 142: limit portion; |
| 1421: first inclined face; | 1422: second inclined face; |
| 171: active inner rod; | 172: passive outer rod; |
| 173: second reset spring; | 174: threaded push plate; |
| 175: fixed plate; | 176: third reset spring; |
| 177: fixed cover; | |
| 1711: inner rod gear portion; | 1712: inner rod body portion; |
| 1721: screw rod portion; | 1722: connection portion; |
| 1741: holding portion; | 1742: rack portion; |
| 1743: slide portion; | |
| 191: wireless transmitting coil; | 192: transmitting control board; |
| 193: battery; | 194: wireless battery housing; |
| 201: wireless receiving coil; | 202: receiving control board. |

### DETAILED DESCRIPTION OF THE PREFERRED EMBODIMENT

In order to explain the present invention more clearly, the present invention will be further described in detail with reference to accompany drawings as follows.

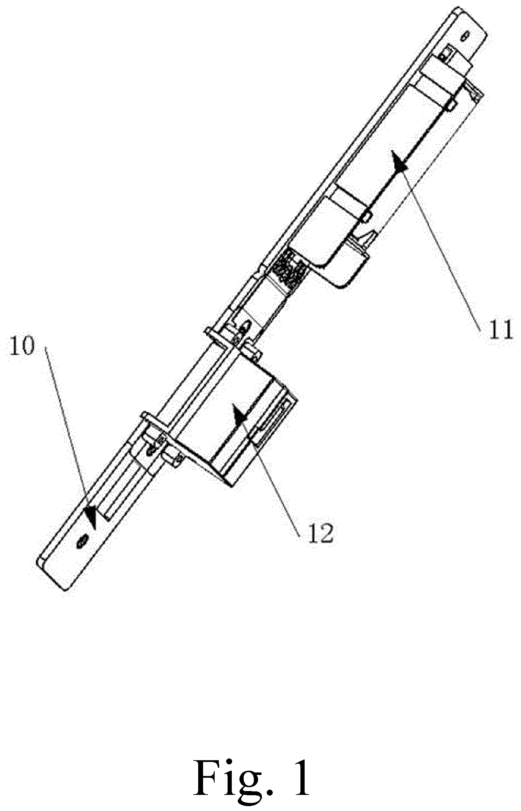

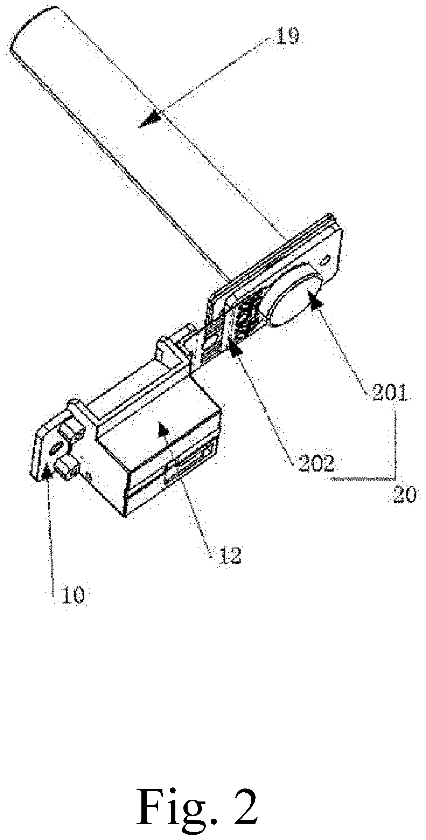

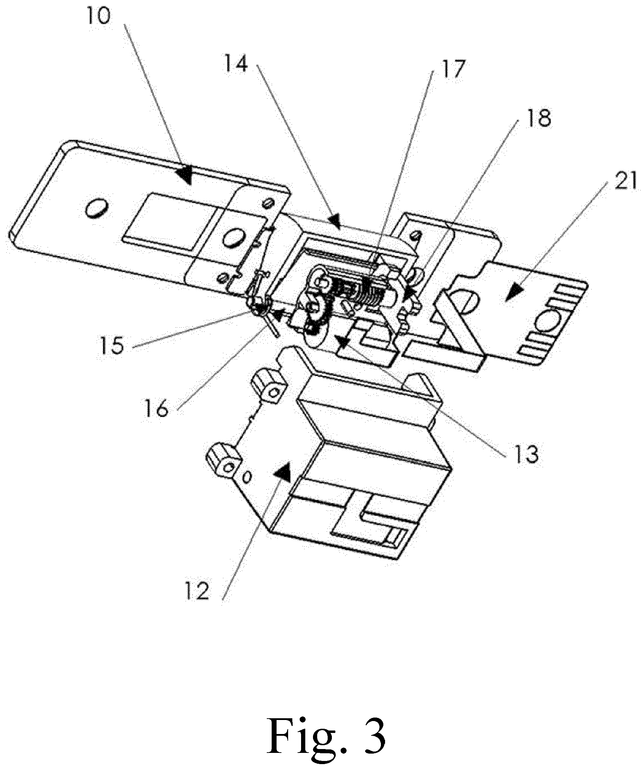

Referring to Figs. 1 to 3, a low-power-consumption intelligent electric lock mechanism according to a preferred embodiment of the present invention is illustrated, which comprises a lock case 10, a lock-cylinder housing 12, a motor 13, a strike plate 14, a first reset spring 15, a central rod 16, a spiral propulsion structure 17 and a holding block 18, wherein the lock case 10 is fixed within a door frame, two ends of the central rod 16 are respectively fixed to two side walls of the lock-cylinder housing 12, both of a tail of the strike plate 14 and the first reset spring 15 penetrate through the central rod 16, one end of the first reset spring 15 is fixed within the strike plate 14, another end of the first reset spring 15 is held against an inner wall of the lock-cylinder housing 12, one end of the spiral propulsion structure 17 is mechanically connected with the motor 13, another end of the spiral propulsion structure 17 is connected with the holding block 18, a top portion of the holding block 18 is held against a bottom portion of the strike plate 14. When the motor 13 is started, the spiral propulsion structure 17 pulls back the holding block 18, the first reset spring 15 drives the strike plate 14 to be inserted into the lock-cylinder housing 12; when the motor 13 is switched off, the spiral propulsion structure 17 pushes out the holding block 18, the holding block 18 drives the strike plate 14 to rise and protrude out of the lock-cylinder housing 12.

Compared with the prior art, in the intelligent electric lock mechanism provided by the present invention, the strike plate 14 is fixed to a central shaft, the holding block 18 is held against the strike plate 14 under normal conditions, a head portion of the strike plate 14 protrudes out of the lock-cylinder housing 12 for achieving the clamping fixation with an electric lock, so that a door is closed. The motor 13 is controlled by a mobile phone. When the motor 13 is started, the spiral propulsion structure 17 pulls back the holding block 18, the first reset spring 15 drives the strike plate 14 to be inserted into the lock-cylinder housing 12, so that the strike plate 14 is disconnected with the electric lock, thereby opening the door; when the motor 13 is switched off, the spiral propulsion structure 17 pushes out the holding block 18, the holding block 18 drives the strike plate 14 to rise and protrude out of the lock-cylinder housing 12. The intelligent electric lock mechanism provided by the present invention is able to adapt to different sizes and different types of electronic locks, which is convenient for the modification of electronic locks.

According to the preferred embodiment of the present invention, the intelligent electric lock mechanism further comprises a wireless power transmitting unit 19, a wireless power receiving unit 20 and a wired battery unit 11, wherein the wireless power receiving unit 20 and the wired battery unit 11 are located at a side of the lock case 10, the wireless power transmitting unit 19 is opposite to the wireless power receiving unit 20, and the wireless power transmitting unit 19 is located within the door.

According to the preferred embodiment of the present invention, the wireless power transmitting unit 19 comprises a wireless transmitting coil 191, a transmitting control board 192, a battery 193 and a wireless battery housing 194, wherein an input end of the transmitting control board 192 is connected with the battery 193, an output end of the transmitting control board 192 is connected with the wireless transmitting coil 191, the wireless battery housing 194 is sleeved outside the transmitting control board 192. The wireless power receiving unit 20 comprises a wireless receiving coil 201 and a receiving control board 202, wherein an input end of the receiving control board 202 is connected with the wireless receiving coil 201, an output end of the receiving control board 202 is connected with the motor 13 through an FPCB (flexible printed circuit board) 21, the wireless transmitting coil 191 is opposite to the wireless receiving coil 201, a side wall of the door has an accommodating groove which is opposite to the door frame, the wireless battery housing 194 is fixed within the accommodating groove, the wireless transmitting coil 191 is attached to an inner surface of the wireless battery housing 194, and the wireless transmitting coil 191 and the wireless receiving coil 201 transmit power to each other when the door is closed. The power transmission process is realized through the cooperation between the wireless transmitting coil 191 and the wireless receiving coil 201, which is simple, does not occupy a large area, and does not hinder the beauty of the door. The wired battery unit 11 comprises a stand-by battery, which is convenient to provide real-time power supply for the motor. An external surface of the lock-cylinder housing 12 has a slot for fixing the FPCB and a slotted hole for leading out the FPCB. The slot is a strip-shaped slot that is able to be drawn out in both directions, which is convenient for changing the lead-out direction of the FPCB.

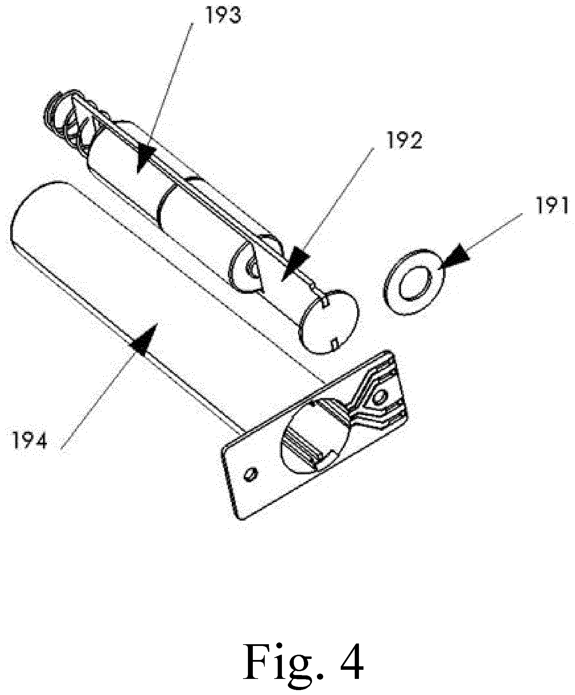

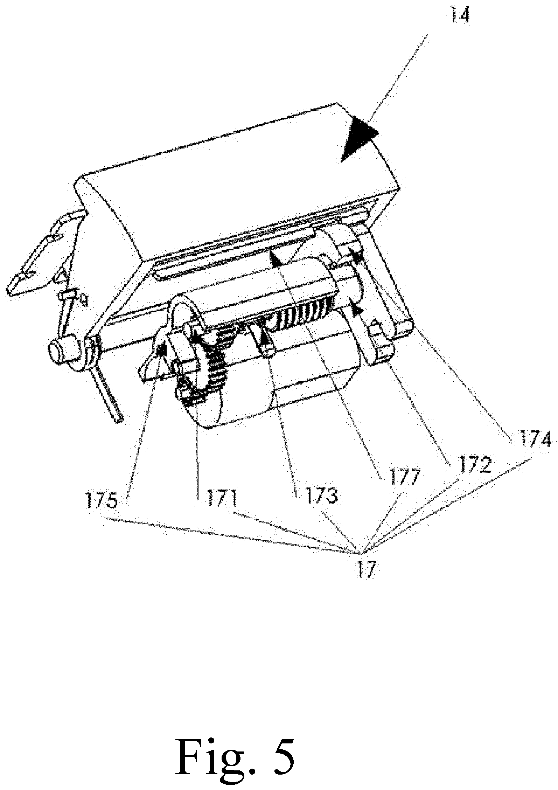

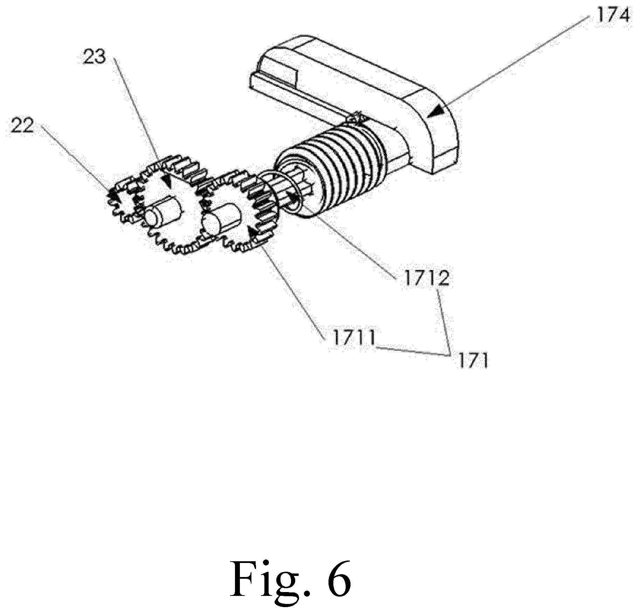

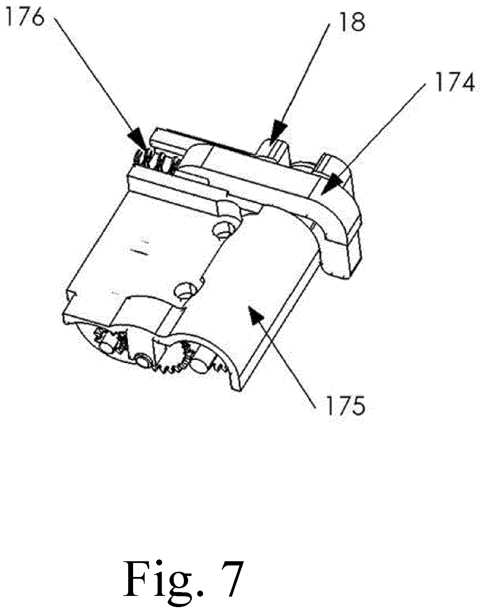

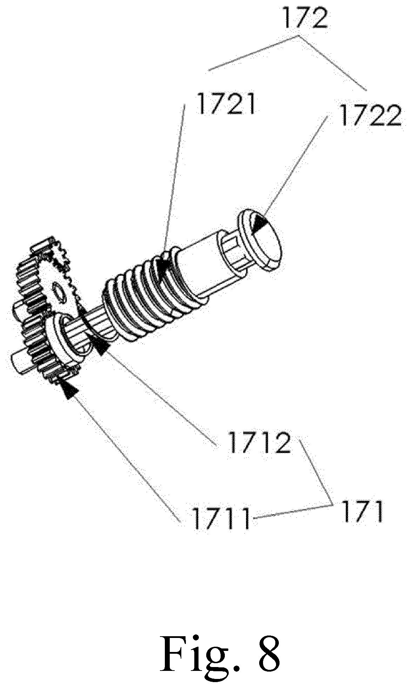

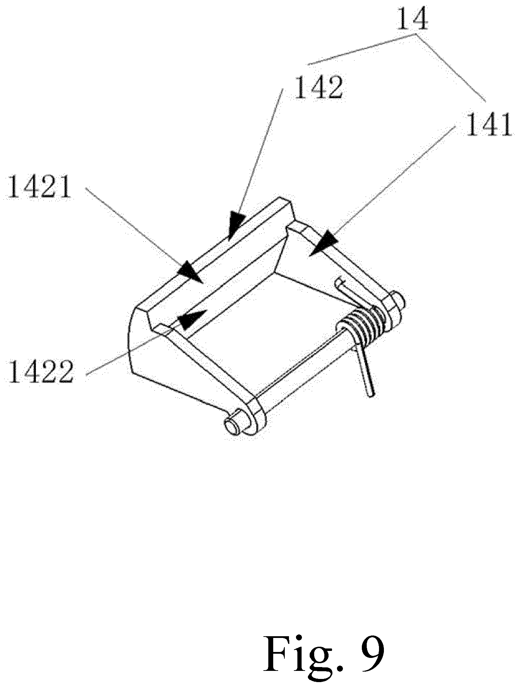

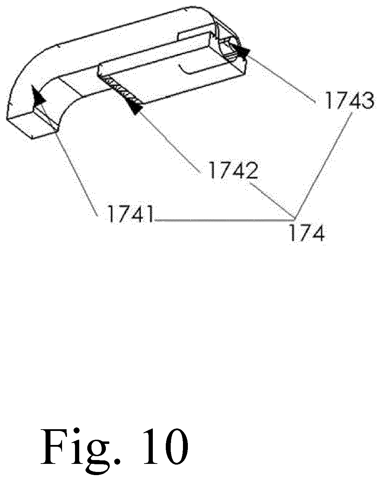

Referring to Figs. 4-10, the spiral propulsion structure 17 comprises an active inner rod 171, a passive outer rod 172, a second reset spring 173 and a threaded push plate 174, wherein one end of the active inner rod 171 is mechanically connected with the motor 13, another end of the active inner rod 171 is sleeved within the passive outer rod 172, the second reset spring 173 is clamped between the active inner rod 171 and the passive outer rod 172, the holding block 18 is fixed to an end portion of the passive outer rod 172, the passive outer rod 172 has external threads at an external surface thereof, a rack is provided at a position where the threaded push plate 174 contacts with the external threads; the motor 13 drives the active inner rod 171 to rotate the passive outer rod 172 and horizontally move under an action of the rack, the second reset spring 173 is contracted, the holding block 18 is detached from the strike plate 14; after stopping the motor 13, the second reset spring 173 is stretched, the passive outer rod 172 drives the holding block 18 to hold against the strike plate 14, so that the strike plate 14 is ejected.

According to the preferred embodiment of the present invention, the active inner rod 171 comprises an inner rod gear portion 1711 and an inner rod body portion 1712; the passive outer rod 172 comprises a screw rod portion 1721 and a connection portion 1722, wherein the inner rod body portion 1712 is a cross-shaped solid rod, an internal surface of the screw rod portion 1721 has a hollow slot which matches the cross-shaped solid rod.

According to the preferred embodiment of the present invention, the intelligent electric lock mechanism further comprises a driving wheel 22 and a driven wheel 23, wherein the driving wheel 22 is fixed to an end portion of the motor 13, one end of the driven wheel 23 is engaged with the driving wheel 22, another end of the driven wheel 23 is engaged with the inner rod gear portion 1711, the inner rod gear portion 1711 is integrally formed with the inner rod body portion 1712.

According to the preferred embodiment of the present invention, the holding block 18 has a notch, the connection portion 1722 comprises a round head portion and a round neck portion, wherein the round head portion passes through the notch, the round neck portion is stuck in the notch, and the round head portion, the round neck portion and the screw rod portion 1721 are integrally formed.

According to the preferred embodiment of the present invention, the spiral propulsion structure 17 further comprises a fixed plate 175, a third reset spring 176 and a fixed cover 177, wherein the fixed plate 175 covers a surface of the motor 13 and the passive outer rod 172, the fixed plate 175 has a slideway for fixing the threaded push plate 174, one end of the threaded push plate 174 holds against an internal surface of the strike plate 14, another end of the threaded push plate 174 is inserted into the slideway, the third reset spring 176 is fixed within the slideway and clamped between the threaded push plate 174 and the lock-cylinder housing 12, the fixed cover 177 is fixed to the lock-cylinder housing 12, and the threaded push plate 174 is provided between the fixed cover 177 and the fixed plate 175.

According to the preferred embodiment of the present invention, the threaded push plate 174 comprises a holding portion 1741, a rack portion 1742 and a slide portion 1743, wherein the holding portion 1741, the rack portion 1742 and the slide portion 1743 form a Z-shape, the rack portion 1742 is engaged with the external threads of the passive outer rod 172, the slide portion 1743 comprises a slide rail which matches the slideway and has a spring accommodating slot for fixing the third reset spring 176.

According to the preferred embodiment of the present invention, the strike plate 14 comprises a rotary portion 141 and a limit portion 142, wherein the rotary portion 141 is located at two ends of the limit portion 142, an end portion of the rotary portion 141 passes through the central rod 16, the holding block 18 is held against the rotary portion 141, an internal surface of the limit portion 142 comprises a first inclined face 1421 and a second inclined face 1422, the first inclined face 1421 is seized with the electric lock, the second inclined face 1422 contacts with the holding portion 1741.

The above disclosures are only a few specific embodiments of the present invention, but the present invention is not limited thereto, and any changes that are able to be thought of by those skilled in the art should fall into the protection scope of the present invention.

## Claims

1. A low-power-consumption intelligent electric lock mechanism, which comprises a lock case, a lock-cylinder housing, a motor, a strike plate, a first reset spring, a central rod, a spiral propulsion structure and a holding block, wherein:
the lock case is fixed within a door frame, two ends of the central rod are respectively fixed to two side walls of the lock-cylinder housing, both of a tail of the strike plate and the first reset spring penetrate through the central rod, one end of the first reset spring is fixed within the strike plate, another end of the first reset spring is held against an inner wall of the lock-cylinder housing, one end of the spiral propulsion structure is mechanically connected with the motor, another end of the spiral propulsion structure is connected with the holding block, a top portion of the holding block is held against a bottom portion of the strike plate,
thereby when the motor is started, the spiral propulsion structure pulls back the holding block, the first reset spring drives the strike plate to be inserted into the lock-cylinder housing; when the motor is switched off, the spiral propulsion structure pushes out the holding block, the holding block drives the strike plate to rise and protrude out of the lock-cylinder housing.

2. The low-power-consumption intelligent electric lock mechanism according to claim 1, further comprising a wireless power transmitting unit, a wireless power receiving unit and a wired battery unit, wherein the wireless power receiving unit and the wired battery unit are located at a side of the lock case, the wireless power transmitting unit is opposite to the wireless power receiving unit, and the wireless power transmitting unit is located within a door.

3. The low-power-consumption intelligent electric lock mechanism according to claim 2, wherein:
the wireless power transmitting unit comprises a wireless transmitting coil, a transmitting control board, a battery and a wireless battery housing, wherein:
an input end of the transmitting control board is connected with the battery, an output end of the transmitting control board is connected with the wireless transmitting coil, the wireless battery housing is sleeved outside the transmitting control board;
the wireless power receiving unit comprises a wireless receiving coil and a receiving control board, wherein:
an input end of the receiving control board is connected with the wireless receiving coil, an output end of the receiving control board is connected with the motor through an FPCB (flexible printed circuit board), the wireless transmitting coil is opposite to the wireless receiving coil.

4. The low-power-consumption intelligent electric lock mechanism according to claim 1, wherein:
the spiral propulsion structure comprises an active inner rod, a passive outer rod, a second reset spring and a threaded push plate, wherein:
one end of the active inner rod is mechanically connected with the motor, another end of the active inner rod is sleeved within the passive outer rod, the second reset spring is clamped between the active inner rod and the passive outer rod, the holding block is fixed to an end portion of the passive outer rod, the passive outer rod has external threads at an external surface thereof, a rack is provided at a position where the threaded push plate contacts with the external threads.

5. The low-power-consumption intelligent electric lock mechanism according to claim 4, wherein the active inner rod comprises an inner rod gear portion and an inner rod body portion; the passive outer rod comprises a screw rod portion and a connection portion, wherein the inner rod body portion is a cross-shaped solid rod, an internal surface of the screw rod portion has a hollow slot which matches the cross-shaped solid rod.

6. The low-power-consumption intelligent electric lock mechanism according to claim 5, further comprising a driving wheel and a driven wheel, wherein the driving wheel is fixed to an end portion of the motor, one end of the driven wheel is engaged with the driving wheel, another end of the driven wheel is engaged with the inner rod gear portion, the inner rod gear portion is integrally formed with the inner rod body portion.

7. The low-power-consumption intelligent electric lock mechanism according to claim 6, wherein the holding block has a notch, the connection portion comprises a round head portion and a round neck portion, wherein the round head portion passes through the notch, the round neck portion is stuck in the notch, and the round head portion, the round neck portion and the screw rod portion are integrally formed.

8. The low-power-consumption intelligent electric lock mechanism according to claim 4, wherein:
the spiral propulsion structure further comprises a fixed plate, a third reset spring and a fixed cover, wherein:
the fixed plate covers a surface of the motor and the passive outer rod, the fixed plate has a slideway for fixing the threaded push plate, one end of the threaded push plate holds against an internal surface of the strike plate, another end of the threaded push plate is inserted into the slideway, the third reset spring is fixed within the slideway and clamped between the threaded push plate and the lock-cylinder housing, the fixed cover is fixed to the lock-cylinder housing, and the threaded push plate is provided between the fixed cover and the fixed plate.

9. The low-power-consumption intelligent electric lock mechanism according to claim 8, wherein the threaded push plate comprises a holding portion, a rack portion and a slide portion, wherein the holding portion, the rack portion and the slide portion form a Z-shape, the rack portion is engaged with the external threads of the passive outer rod, the slide portion comprises a slide rail which matches the slideway and has a spring accommodating slot for fixing the third reset spring.

10. The low-power-consumption intelligent electric lock mechanism according to claim 9, wherein the strike plate comprises a rotary portion and a limit portion, wherein the rotary portion is located at two ends of the limit portion, an end portion of the rotary portion passes through the central rod, the holding block is held against the rotary portion, an internal surface of the limit portion comprises a first inclined face and a second inclined face, the first inclined face is seized with the electric lock, the second inclined face contacts with the holding portion.
